# EUROPEAN PATENT APPLICATION

(11) **EP 4 708 605 A1**
(43) Date of publication of application: **11.03.2026**
(21) Application number: 24861313.5
(22) Date of filing: 27.11.2024
(51) Int. Cl.: H02J 1/10, B60L 53/10, B60L 53/31, B60L 53/53, B60L 53/62, B60L 53/63, B60L 53/67, B60L 55/00, H02J 7/02

(54) **CHARGING METHOD AND ENERGY STORAGE CHARGING DEVICE**

(30) Priority: 08.07.2024 CN 202410906500
(71) Applicant: Contemporary Amperex Technology Co., Limited, Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Ran, Handong
(86) International application number: PCT/CN2024/134979
(87) International publication number: WO 2026/011654

(57) **Abstract**

The embodiments of the present disclosure provide a charging method and an energy storage charging device, wherein the charging method comprises: in response to a charging request sent by a device to be charged, acquiring a state of charge of an energy storage apparatus, and comparing a charging power of the device to be charged with a first supply power of a first charging module corresponding to a charging gun connected to the device to be charged, to obtain a comparison result; in response to the comparison result indicating that the first charging module corresponding to the device to be charged does not meet a power supply requirement, determining power to be allocated based on the charging power and the first supply power; based on a second supply power of each second charging module and the power to be allocated, determining at least one second charging module that meets an allocation condition as a target charging module; in response to the state of charge being less than a preset threshold, disconnecting an energy storage switch to supply power to the first charging module corresponding to the device to be charged and the target charging module through a power grid connected to the energy storage charging device.

## Description

### CROSS-REFERENCE TO RELATED APPLICATIONS

The present disclosure is filed based on and claims priority to Chinese Patent Application No. 202410906500.5 filed on July 8, 2024 and entitled "CHARGING METHOD AND ENERGY STORAGE CHARGING DEVICE", which is incorporated herein by reference in its entirety.

### TECHNICAL FIELD

The embodiments of the present disclosure relate to the technical field of batteries, and relate to but are not limited to a charging method and an energy storage charging device.

### BACKGROUND

In recent years, the world has faced major challenges in sustainable development, such as energy shortages, climate change and pollutant emissions. Therefore, countries have begun to pay extensive attention to the development of new energy vehicles represented by electric vehicles. However, the development of electric vehicles is also affected by a series of constraints, among which range anxiety is considered to be one of the main obstacles to the widespread acceptance of all-electric vehicles. Compared with the properties of traditional automobiles, electric vehicles have a higher dependence on charging systems.

However, different electric vehicles have different battery types and charging power. In the related art, when using a charging pile with a plurality of charging guns to allocate power, it usually divides the supply power of the power grid equally, resulting in insufficient power for some charging piles and excess power for some charging piles. This not only fails to meet the charging requirements of different vehicles, but also leads to the problem of waste of resources.

### SUMMARY OF THE INVENTION

In order to solve the problems existing in the related art, the embodiments of the present disclosure provide a charging method and an energy storage charging device, where a plurality of second charging modules are provided to supplement the power of the charging gun when the charging power is insufficient. It not only has a simple structure and can meet the charging requirements of vehicles with different power, but also reduces the waste of resources.

In a first aspect, the present disclosure provides a charging method, which is applied to a control unit of an energy storage charging device, wherein the energy storage charging device is connected to a plurality of charging guns; the energy storage charging device at least comprises an energy storage apparatus connected to a DC bus, a plurality of first charging modules each connected to a corresponding charging gun, and a plurality of second charging modules each connected to all of the charging guns, any two charging modules of the plurality of first charging modules and the plurality of second charging modules are connected to the DC bus in parallel, and an energy storage switch is provided between the energy storage apparatus and the DC bus; the charging method comprises: in response to a charging request sent by a device to be charged, acquiring a state of charge of the energy storage apparatus, and comparing the charging power of the device to be charged with a first supply power of the first charging module corresponding to the charging gun connected to the device to be charged, to obtain a comparison result; in response to the comparison result indicating that the first charging module corresponding to the device to be charged does not meet a power supply requirement, determining power to be allocated based on the charging power and the first supply power; based on a second supply power of each second charging module and the power to be allocated, determining at least one second charging module that meets an allocation condition as a target charging module; in response to the state of charge being less than a preset threshold, disconnecting the energy storage switch to supply power to the first charging module corresponding to the device to be charged and the target charging module through a power grid connected to the energy storage charging device.

In the above embodiment, in addition to the first charging module corresponding to each charging gun, a plurality of additional second charging modules connected in parallel with the first charging modules are provided in the energy storage charging device to supplement the power of the charging gun when the charging power of a certain charging gun is insufficient, which can not only meet the charging requirements of vehicles with different power but also reduce the waste of resources; at the same time, the source of electric energy for charging the device to be charged is determined based on the state of the energy storage apparatus, thereby reducing the problem of damage to the energy storage apparatus caused by continuing to supply power when the power of the energy storage apparatus is low.

In some embodiments, the second charging module is connected to the charging gun through a power supply switch; based on the charging power and the first supply power, the power to be allocated is determined, comprising: determining a difference between the charging power and the first supply power as the power to be allocated; correspondingly, based on the second supply power of each second charging module and the power to be allocated, determining at least one second charging module that meets the allocation condition as a target charging module, comprising: based on the second supply power of each second charging module and the power to be allocated, determining, among the plurality of second charging modules, at least one second charging module whose sum of supply power is greater than or equal to the power to be allocated with the error being within a preset range as a target charging module; correspondingly, the charging method further comprises: closing the power supply switch between the target charging module and the charging gun connected to the device to be charged, so as to supply power to the device to be charged through the target charging module and the first charging module corresponding to the device to be charged.

In the above embodiment, the error between the target charging module and the power to be allocated is taken into consideration, and the error is controlled within a preset range, which can reduce the waste of resources.

In some embodiments, the energy storage charging device further comprises a first bidirectional inverter, and the other side of the first bidirectional inverter is connected to the power grid; the charging method further comprises: in response to the state of charge being greater than or equal to a preset threshold, closing the energy storage switch to supply power to the first charging module corresponding to the device to be charged and the target charging module through the power grid and the energy storage apparatus.

In the above embodiment, the source of electric energy for charging the device to be charged is determined based on the state of the energy storage apparatus. When the electric quantity of the energy storage apparatus is low, power continues to be supplied through the power grid, thereby avoiding the problem of damage to the energy storage apparatus caused by the energy storage apparatus with low electric quantity continuing to supply power.

In some embodiments, the DC bus of the energy storage charging device comprises a first DC bus and a second DC bus, and the first DC bus and the second DC bus are connected through a bus switch; the second DC bus is connected to each charging gun and a second bidirectional inverter respectively, and a control switch is arranged between each charging gun and the second DC bus; the charging method further comprises: in response to a power supply request of a device to be used for power supply, determining whether the energy storage charging device is connected to a device to be charged; in response to the energy storage charging device being connected to a device to be charged, closing the control switch corresponding to the charging gun connected to the device to be used for power supply and the bus switch, so as to supply power to the device to be charged through the device to be used for power supply; in response to the energy storage charging device not being connected to a device to be charged, closing the control switch corresponding to the charging gun connected to the device to be used for power supply, the bus switch and the energy storage switch, so as to supply power to the energy storage apparatus through the device to be used for power supply, and/or, supply power to the power grid through the device to be used for power supply and the second bidirectional inverter.

In the above embodiment, electric vehicles can be used as a power source to supply power to the power grid when they do not need to be charged. During peak hours of the power grid, electric vehicles can serve as distributed energy storage units to provide the necessary power support for the power grid, helping to ease the pressure on the power grid, thereby improving overall energy utilization efficiency. Electric vehicles have large battery capacity and are charged quickly. As a medium for energy storage and release, they can more effectively balance electricity supply and demand and reduce energy waste. At the same time, for electric vehicle owners, supplying power to the power grid can provide certain economic compensation and reduce the cost of using the vehicle.

In some embodiments, a selector switch is arranged between the first charging modules and the DC bus; the control switch corresponding to the charging gun connected to the device to be used for power supply and the bus switch are closed to supply power to the device to be charged through the device to be used for power supply, comprising: closing the control switch corresponding to the charging gun connected to the device to be used for power supply, the bus switch and the selector switch corresponding to the charging gun connected to the device to be charged to supply power to the device to be charged through the device to be used for power supply.

In the above embodiment, electric vehicles can be used as a power source to supply power to the power grid when they do not need to be charged. During peak hours of the power grid, electric vehicles can serve as distributed energy storage units to provide the necessary power support for the power grid, helping to ease the pressure on the power grid, thereby improving overall energy utilization efficiency. Electric vehicles have large battery capacity and are charged quickly. As a medium for energy storage and release, they can more effectively balance electricity supply and demand and reduce energy waste. At the same time, for electric vehicle owners, supplying power to the power grid can provide certain economic compensation and reduce the cost of using the vehicle.

In some embodiments, the charging method further comprises: in response to the power supply request, determining whether the energy storage charging device is connected to a device to be used for power supply that is supplying power; in response to the energy storage charging device being connected to a device to be used for power supply that is supplying power, acquiring the power supply end time of the device to be used for power supply that is supplying power, and sending the power supply end time to the device to be used for power supply that sends the power supply request.

In the above embodiment, the energy storage charging device is restricted to only have one vehicle to feed the energy storage apparatus or the power grid, thereby ensuring the stability of power input and reducing the safety risks in the power transmission process.

In a second aspect, the embodiments of the present disclosure provide an energy storage charging device, which comprises: an energy storage apparatus connected to a DC bus of the energy storage charging device, wherein an energy storage switch is arranged between the energy storage apparatus and the DC bus, and the energy storage apparatus is used for storing electric energy; a plurality of first charging modules, each first charging module being connected to a corresponding charging gun, wherein the energy storage charging device is connected to a plurality of charging guns, and the charging guns are used for connecting devices to be charged; a plurality of second charging modules, each second charging module being connected to all of the charging guns, wherein any two charging modules of the plurality of first charging modules and the plurality of second charging modules are connected to the DC bus in parallel; a control unit, used for, in response to a charging request sent by a device to be charged, acquiring a state of charge of the energy storage apparatus, and comparing a charging power of the device to be charged with a first supply power of the first charging module corresponding to the charging gun connected to the device to be charged, to obtain a comparison result; in response to the comparison result indicating that the first charging module corresponding to the device to be charged does not meet a power supply requirement, determining power to be allocated based on the charging power and the first supply power; based on a second supply power of each second charging module and the power to be allocated, determining at least one second charging module that meets an allocation condition as a target charging module; in response to the state of charge being less than a preset threshold, disconnecting the energy storage switch to supply power to the first charging module corresponding to the device to be charged and the target charging module through a power grid connected to the energy storage charging device.

In the above embodiment, in addition to the first charging module corresponding to each charging gun, a plurality of additional second charging modules are provided in the energy storage charging device to supplement the power of a certain charging gun when the charging power of the charging gun is insufficient, which can not only meet the charging requirements of vehicles with different power but also reduce the waste of resources; at the same time, the source of electric energy for charging the device to be charged is determined based on the state of the energy storage apparatus, thereby reducing the problem of damage to the energy storage apparatus caused by continuing to supply power when the power of the energy storage apparatus is low.

In some embodiments, the energy storage charging device further comprises a power supply switch between the second charging module and the charging gun; the control unit is also used to determine a difference between the charging power and the first supply power as the power to be allocated; the control unit is also used to determine, based on the second supply power of each second charging module and the power to be allocated, among the plurality of second charging modules, at least one second charging module whose sum of supply power is not less than the power to be allocated with the error being within a preset range as a target charging module; the control unit is also used to close the power supply switch between the target charging module and the charging gun connected to the device to be charged, so as to supply power to the device to be charged through the target charging module and the first charging module corresponding to the device to be charged.

In the above embodiment, the error between the target charging module and the power to be allocated is taken into consideration, and the error is controlled within a preset range, which can reduce the waste of resources.

In some embodiments, the energy storage charging device further comprises a first bidirectional inverter; the first bidirectional inverter is connected to the DC bus and the power grid respectively and used for conversion between AC and DC; the control unit is also used for, in response to the state of charge being greater than or equal to the preset threshold, closing the energy storage switch to supply power to the first charging module corresponding to the device to be charged and the target charging module through the power grid and the energy storage apparatus.

In the above embodiment, the source of electric energy for charging the device to be charged is determined based on the state of the energy storage apparatus. When the electric quantity of the energy storage apparatus is low, power continues to be supplied through the power grid, thereby avoiding the problem of damage to the energy storage apparatus caused by the energy storage apparatus with low electric quantity continuing to supply power.

In some embodiments, the DC bus of the energy storage charging device comprises a first DC bus and a second DC bus, and the first DC bus and the second DC bus are connected through a bus switch; a control switch is arranged between each charging gun and the second DC bus; the energy storage charging device further comprises a second bidirectional inverter; the second bidirectional inverter is arranged between the second DC bus and the power grid; the control unit is also used for, in response to a power supply request of a device to be used for power supply, determining whether the energy storage charging device is connected to a device to be charged; the control unit is also used for, in response to the energy storage charging device being connected to a device to be charged, closing the control switch corresponding to the charging gun connected to the device to be used for power supply and the bus switch, so as to supply power to the device to be charged through the device to be used for power supply; the control unit is also used for, in response to the energy storage charging device not being connected to a device to be charged, closing the control switch corresponding to the charging gun connected to the device to be used for power supply, the bus switch and the energy storage switch, so as to supply power to the energy storage apparatus through the device to be used for power supply, and/or, supply power to the power grid through the device to be used for power supply and the second bidirectional inverter.

In the above embodiment, electric vehicles can be used as a power source to supply power to the power grid when they do not need to be charged. During peak hours of the power grid, electric vehicles can serve as distributed energy storage units to provide the necessary power support for the power grid, helping to ease the pressure on the power grid, thereby improving overall energy utilization efficiency. Electric vehicles have large battery capacity and are charged quickly. As a medium for energy storage and release, they can more effectively balance electricity supply and demand and reduce energy waste. At the same time, for electric vehicle owners, supplying power to the power grid can provide certain economic compensation and reduce the cost of using the vehicle.

In some embodiments, the rated power of the first bidirectional inverter and the second bidirectional inverter is less than a first preset value, and the sum of supply power of the plurality of first charging modules and the plurality of second charging modules is greater than a second preset value; wherein the second preset value is greater than the first preset value.

In the above embodiment, the rated power of the first bidirectional inverter and the second bidirectional inverter enables the energy storage charging device to achieve low power input, without the need to configure an external transformer for the energy storage charging device or to expand the transformer capacity, thereby reducing the cost of the energy storage charging device.

The above description is only a summary of the technical solutions of the present disclosure, and in order to understand more clearly the technical means of the present disclosure for implementing them in accordance with the contents of the specification, and in order to make the above and other objectives, features and advantages of the present disclosure more apparent and readily understandable, detailed description of the present disclosure are hereby set forth below.

### BRIEF DESCRIPTION OF DRAWINGS

Fig. 1 is a first optional schematic structural diagram of an energy storage charging device provided in an embodiment of the present disclosure;
Fig. 2 is a first optional schematic flow diagram of a charging method provided in an embodiment of the present disclosure;
Fig. 3 is a second optional schematic structural diagram of an energy storage charging device provided in an embodiment of the present disclosure;
Fig. 4 is a third optional schematic structural diagram of an energy storage charging device provided in an embodiment of the present disclosure;
Fig. 5 is a second optional schematic flow diagram of a charging method provided in an embodiment of the present disclosure;
Fig. 6 is a fourth optional schematic structural diagram of an energy storage charging device provided in an embodiment of the present disclosure;
Fig. 7 is a third optional schematic flow diagram of a charging method provided in an embodiment of the present disclosure;
Fig. 8 is a fifth optional schematic structural diagram of an energy storage charging device provided in an embodiment of the present disclosure;
Fig. 9 is a sixth optional schematic structural diagram of an energy storage charging device provided in an embodiment of the present disclosure;
Fig. 10 is a schematic diagram of the architecture of a storage-charging integrated machine provided in an embodiment of the present disclosure;
Fig. 11 is a schematic flow diagram showing the power allocation of a plurality of charging gun in a storage-charging integrated machine provided in an embodiment of the present disclosure;
Fig. 12 is a schematic structural diagram of a power allocation unit provided in an embodiment of the present disclosure;
Fig. 13 is a schematic flow diagram showing the power allocation of an energy storage module provided in an embodiment of the present disclosure;
Fig. 14 is a schematic flow diagram of the vehicle to grid (V to G) function of a storage-charging integrated machine provided in an embodiment of the present disclosure.

### DETAILED DESCRIPTION

In order to make the objectives, technical solutions and advantages of the present disclosure clearer, the present disclosure will be further elaborated in detail below in combination with the drawings. The described embodiments should not be regarded as limitations to the present disclosure, and all other embodiments obtained by those of ordinary skills in the art without making creative efforts fall within the scope of protection of the present disclosure.

In the following description, "some embodiments" are involved, which describe a subgroup of all possible embodiments, but it is to be understood that "some embodiments" may be the same or different subsets of all possible embodiments and may be combined with each other without conflict. Unless otherwise defined, all technical and scientific terms used in the embodiments of the present disclosure have the same meanings as those commonly understood by those skilled in the art to which the embodiments of the present disclosure belong. The terms used in the embodiments of the present disclosure are for the purpose of describing embodiments of the present disclosure only and are not intended to limit the present disclosure.

At present, new energy batteries are increasingly applied in daily life and industry. The new energy batteries are not only applied in energy storage power supply systems such as water power, fire power, wind power, and solar power stations, but also widely applied in electric transportation tools, such as electric bicycles, electric motorcycles and electric vehicles, as well as many fields, such as aerospace. As the application fields of the power batteries continue to expand, their market demand is also constantly expanding. In the embodiments of the present disclosure, the battery involved can be a battery cell, also known as a cell. The battery cell refers to a basic unit that can realize mutual conversion of chemical energy and electric energy, and may be used to make a battery module or a battery pack to provide power to an electrical apparatus. The battery cell may be a secondary battery, and the secondary battery refers to a battery cell that can be used continually by activating a active material in a charging manner after the battery cell is discharged. The battery cell may be a lithium-ion battery, a sodium ion battery, a sodium/lithium ion battery, a lithium metal battery, a sodium metal battery, a lithium sulfur battery, a magnesium-ion battery, a nickel-metal hydride battery, a nickel cadmium battery, a lead accumulator, etc., which is not limited in the embodiments of the present disclosure.

In the embodiments of the present disclosure, the cell is the core component of the battery pack. A battery pack usually includes a plurality of cells, which are combined together to provide the required electric energy capacity and voltage. The components of the battery pack include at least: battery cells, a battery management system (BMS), a shell, a connection harness, a connector, an interface, etc. These components work together to combine the battery cells into a fully functional battery pack for a variety of application scenarios. For example, the battery pack may be applied to an electric vehicle, an energy storage system, a portable electrical device, a solar system, a wind energy system, an emergency backup power supply, an electric tool, or an electric bicycle, etc. The embodiments of the present disclosure do not impose any limitations on this, which can specifically be selected according to the actual application scenario.

In the embodiments of the present disclosure, the cell may refer to a cell of any shape, such as a square cell, a circular cell. The cell usually refers to the battery cell, which is one of the basic units that make up the battery. The cell is the core component of the battery and is responsible for storing and releasing electric energy. The battery cell may be a lithium-ion battery cell (Li-ion cell), a lithium-polymer battery cell (Li-polymer cell), a nickel-metal hydride battery cell (NiMH cell), etc. It should be noted that the embodiments of the present disclosure do not impose any limitations on the cell type, which can specifically be selected according to the actual application scenario.

It should be noted that the battery pack may use different types of battery cells, such as a lithium-ion battery, a nickel-metal hydride battery and a lithium-polymer battery, which is determined according to the actual application needs and performance requirements.

In the embodiments of the present disclosure, the battery may also be a single physical module including one or more battery cells to provide a higher voltage and capacity. When a plurality of battery cells are provided, the plurality of battery cells are connected in series, in parallel or in parallel-series connection through bus components.

At present, there are many types of new energy vehicles on the market, and the update and iteration time is relatively short. Different electric vehicles have different battery types and charging power. The charging power provided by charging piles is single, making it rare to find a charging pile with matching power when charging the vehicle outside. Also, because there are so many new energy vehicles, it is difficult to find an idle charging pile outside. The related art solves the problem of difficulty in charging outside by providing a plurality of charging guns on a charging pile. At the same time, when using a charging pile with a plurality of charging guns for power allocation, the supply power of the power grid is usually evenly divided. However, when charging vehicles of different power through the evenly divided charging guns, some charging piles will have insufficient power and some charging piles will have excess power. This not only fails to meet the charging requirements of different vehicles, but also leads to the waste of resources.

In order to alleviate the problems existing in the related art, the applicant has found that in addition to the charging module corresponding to each charging gun (i.e., charging apparatus bidirectional DC/DC) in the energy storage charging device, a plurality of additional charging modules can also be provided to supplement the power of a certain charging gun when the charging power of the charging gun is insufficient. This can not only meet the charging requirements of vehicles with different power but also reduce the waste of resources.

Based on the above considerations, the applicant, after in-depth research, arranges a plurality of second charging modules in the energy storage charging device. In response to a charging request sent by a device to be charged, the charging power of the device to be charged is compared with the first supply power of the first charging module corresponding to the charging gun connected to the device to be charged. If the first charging module corresponding to the device to be charged does not meet the power supply requirement, the power to be allocated is determined based on the charging power and the first supply power. Based on the second supply power of each second charging module and the power to be allocated, at least one second charging module that meets the allocation condition is determined as a target charging module, and the device to be charged is powered by the target charging module and the first charging module corresponding to the device to be charged.

In this way, the embodiments of the present disclosure provide a plurality of additional second charging modules in addition to the first charging module corresponding to each charging gun in the energy storage charging device, so as to supplement the power of a certain charging gun when the charging power of the charging gun is insufficient. This can not only meet the charging requirements of vehicles with different power but also reduce the waste of resources.

The device to be charged in the charging method disclosed in the embodiments of the present disclosure may be, but is not limited to, electrical devices such as vehicles, battery vehicles, and electric wheelchairs.

The embodiments of the present disclosure provide a charging method, which is implemented by an energy storage charging device. The energy storage charging device can be a storage-charging integrated machine. The energy storage charging device and the device to be charged can communicate with each other via a wireless or controller area network (CAN) bus. The wireless communication between the energy storage charging device and the vehicle can adopt a variety of wireless communication protocols, including Bluetooth, Wi-Fi and mobile communication protocols (such as 4G/5G), etc., to obtain information such as the type, capacity and maximum charging power of the battery of the device to be charged. When the energy storage charging device communicates with the device to be charged through the CAN bus, before starting charging, the device to be charged establishes a connection with the energy storage charging device based on the charging gun. The energy storage charging device can obtain information such as the type, capacity and maximum charging power of the battery of the device to be charged. The energy storage charging device adjusts the power of the charging gun based on the above information.

In the process of charging, the energy storage charging device can regularly collect the charging parameters (such as voltage, current, SOC and other information) of the battery of the device to be charged to adjust the charging parameters. After charging is completed, the energy storage charging device sends a charging completion message to the device to be charged to remind it to unplug the charging gun to complete charging.

Taking the control unit of the energy storage charging device being the execution subject as an example, the technical solution of the present disclosure will be described in detail below with reference to the drawings.

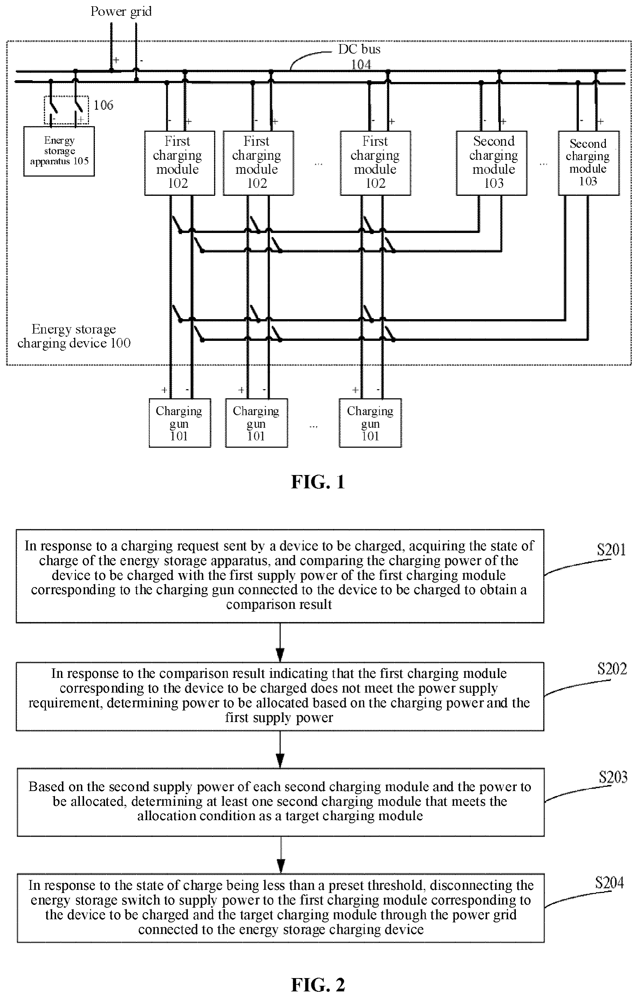

In some embodiments, Fig. 1 is a first optional schematic structural diagram of an energy storage charging device provided in an embodiment of the present disclosure. As shown in Fig. 1, connected to a plurality of charging guns 101, an energy storage charging device 100 includes at least a control unit (not shown), a plurality of first charging modules 102 each connected to a corresponding charging gun, and a plurality of second charging modules 103 each connected to all of the charging guns. Different first charging modules have the same or different rated power, different second charging modules has the same or different rated power, and the number of the plurality of first charging modules 102 is the same as or different from the number of the plurality of second charging modules 103. The energy storage charging device 100 further comprises an energy storage apparatus 105 connected to a DC bus 104, an energy storage switch 106 is provided between the energy storage apparatus 105 and the DC bus 104, and any two charging modules of the plurality of first charging modules 102 and the plurality of second charging modules 103 are connected to the DC bus 104 in parallel.

Here, the control unit can communicate with the hardware of the energy storage charging device such as the first charging module and the second charging module through the CAN bus to achieve real-time data transmission and control between the control unit and other modules. Here, the energy storage charging device 100 provided in the embodiment of the present disclosure can be connected to any available charging gun, and there is no restriction on the type of the charging gun. The energy storage charging device 100 may also comprise a plurality of charging guns.

Based on Fig. 1, Fig. 2 is a first optional schematic flow diagram of a charging method provided in an embodiment of the present disclosure. As shown in Fig. 2, the charging method provided in the embodiment of the present disclosure can be implemented through steps S201 to S204:
Step S201, in response to a charging request sent by a device to be charged, acquiring the state of charge of the energy storage apparatus, and comparing the charging power of the device to be charged with the first supply power of the first charging module corresponding to the charging gun connected to the device to be charged to obtain a comparison result.

In some embodiments, the charging request may be an instruction input or selected by the user based on the central control screen of the vehicle computer, including but not limited to selection operations, confirmation operations, page turning operations, scrolling operations, etc. on the central control screen. For example, the user can select the charging component on the central control screen of the vehicle computer and send a charging request to the energy storage charging device through wireless communication.

In some embodiments, the charging request may also be a charging request sent when the device to be charged is connected to a certain charging gun of the energy storage charging device, that is, when the handshake is successful. The charging request includes at least information such as the type and charging power of the battery in the device to be charged.

In some embodiments, the first charging module may be a bidirectional direct current to direct current (DC/DC) converter, which is connected to the power grid and the battery of the energy storage charging device through a DC bus to achieve bidirectional transmission of electric energy. Here, the rated powers of the plurality of first charging modules in the energy storage charging device can be the same or different. If they are the same, each first charging module provides the same power to the corresponding charging gun, that is, the plurality of first charging modules equally share the power of the energy storage module or the power grid. If the rated powers of the plurality of first charging modules are different, each first charging module provides different power to the corresponding charging gun. At this time, the charging gun of the energy storage charging device can include a supercharging gun, a fast charging gun and a slow charging gun, and different charging guns can provide different supply powers.

In the embodiments of the present disclosure, the energy storage apparatus in the energy storage charging device may refer to the battery of the energy storage charging device, which is used to store electric energy and release it when needed. The power grid refers to a system consisting of power transmission lines, substations, distribution stations and user connections, which is used to transmit electric energy. When the energy storage charging device supplies power to the device to be charged, the power can be supplied by at least one of the energy storage apparatus and the power grid.

In the embodiments of the present disclosure, after receiving a charging request from the device to be charged, the energy storage charging device first determines the state of charge (SOC) of the energy storage apparatus of the energy storage charging device itself. When the state of charge is sufficient, power can be supplied through the energy storage apparatus, and when the power is insufficient, power can be supplied through the power grid.

After receiving the charging request of the device to be charged, the control unit of the energy storage charging device can also determine the charging power of the device to be charged, that is, the power of the device to be charged when charged. In the case where the powers provided by the first charging modules are different, it can be determined whether the power of the charging gun currently connected to the device to be charged matches the charging power according to the charging power of the device to be charged. For example, if the charging power of the charging gun currently connected to the device to be charged is 70 kilowatts (kw), and the charging power of the device to be charged is 150 kw, the energy storage charging device also has a 150 kw charging gun, and the charging gun is idle, at this time, the user can be prompted to make replacement on the display interface of the energy storage charging device, and the replacement information can also be sent to the device to be charged.

Here, in the case where the powers provided by the first charging modules are different, if there is a charging gun that matches the charging power of the device to be charged, the device to be charged can be charged through the charging gun. If there is no charging gun that matches the charging power (the supply power is greater than or equal to the charging power), the supply power of each first charging module can be compared with the charging power, and the charging gun with the supply power closest to the charging power can be displayed on the display interface of the energy storage charging device, prompting the user to switch to this charging gun. The user can also choose not to change and only charge through the currently connected charging gun.

In some embodiments, when the power provided by each first charging module is the same, the charging power of the device to be charged is compared with the first supply power of the first charging module corresponding to the charging gun currently connected to the device to be charged, and a comparison result can be obtained. Here, the comparison result may refer to whether the currently connected charging gun meets the power supply requirement, that is, whether the supply power of the first charging module corresponding to the charging gun is greater than or equal to the charging power of the device to be charged.

Step S202, in response to the comparison result indicating that the first charging module corresponding to the device to be charged does not meet the power supply requirement, determining power to be allocated based on the charging power and the first supply power.

In some embodiments, if the comparison result indicates that the first charging module corresponding to the charging gun currently connected to the device to be charged does not meet the power supply requirement, that is, the first supply power of the first charging module is less than the charging power required by the device to be charged, at this time, the power to be allocated can be calculated, that is, how much power the charging module still lacks.

Here, the power to be allocated may be a difference between the first supply power of the first charging module corresponding to the device to be charged and the charging power.

Step S203, based on the second supply power of each second charging modules and the power to be allocated, determining at least one second charging module that meets the allocation condition as a target charging module.

In the embodiments of the present disclosure, the second charging module may also be a bidirectional DC/DC module, which is connected to the power grid and the battery of the energy storage charging device through a DC bus, and is used to supply power to the charging gun when the supply power of the charging gun is insufficient.

Here, the second supply power of each second charging module may be the same or different.

In the embodiments of the present disclosure, after the power to be allocated is determined, the target charging module for providing charging power to the charging gun connected to the device to be charged is determined according to the supply power of each second charging module. Here, at least one second charging module whose sum of second supply powers is greater than the power to be allocated can be determined as a target charging module. For example, the power to be allocated is 120 kw, and the second supply powers of the plurality of second charging modules are 20 kw, 40 kw, 60 kw and 80 kw respectively. At this time, the two second charging modules corresponding to 40 kw and 80 kw can be determined as target charging modules, and the device to be charged can be powered by the target charging module and the first charging module corresponding to the device to be charged.

Step S204, in response to the state of charge being less than a preset threshold, disconnecting the energy storage switch to supply power to the first charging module corresponding to the device to be charged and the target charging module through the power grid connected to the energy storage charging device.

In some embodiments, the preset threshold may be 5%, that is, when the state of charge of the energy storage apparatus is less than 5%, based on Fig. 1, the energy storage switch 106 between the DC bus 104 and the energy storage apparatus 105 is disconnected, and the first charging module corresponding to the device to be charged and the target charging module are powered by the power grid connected to the energy storage charging device, that is, to provide supply power.

In the embodiments of the present disclosure, since the plurality of first charging modules and the plurality of first charging modules are connected in parallel with each other in pairs, when the power of the first charging module corresponding to the charging gun connected to the device to be charged is insufficient, the supply current of the charging gun connected to the device to be charged is increased through the parallel target charging module, thereby increasing the supply power of the charging gun connected to the device to be charged to meet the charging power requirement of the device to be charged and improve the charging efficiency; at the same time, the source of electric energy for charging the device to be charged is determined based on the state of the energy storage apparatus, thereby reducing the problem of damage to the energy storage apparatus caused by continuing to supply power when the power of the energy storage apparatus is low.

Here, since each second charging module is connected to all of the charging guns, after determining the target charging module, the control unit can control the target charging module to provide supply power to the designated charging gun. As shown in Fig. 1, a switch may be provided between the second charging module and the charging gun to perform control through the switch. Alternatively, a switch may be provided inside the second charging module to perform control by the control unit directly. It can also be any feasible control solutions, which is not limited in the present disclosure.

The embodiments of the present disclosure provide a plurality of additional second charging modules in parallel with the first charging modules in addition to the first charging module corresponding to each charging gun in the energy storage charging device, so as to supplement the power of a certain charging gun when the charging power of the charging gun is insufficient. This can not only meet the charging requirements of vehicles with different power but also reduce the waste of resources.

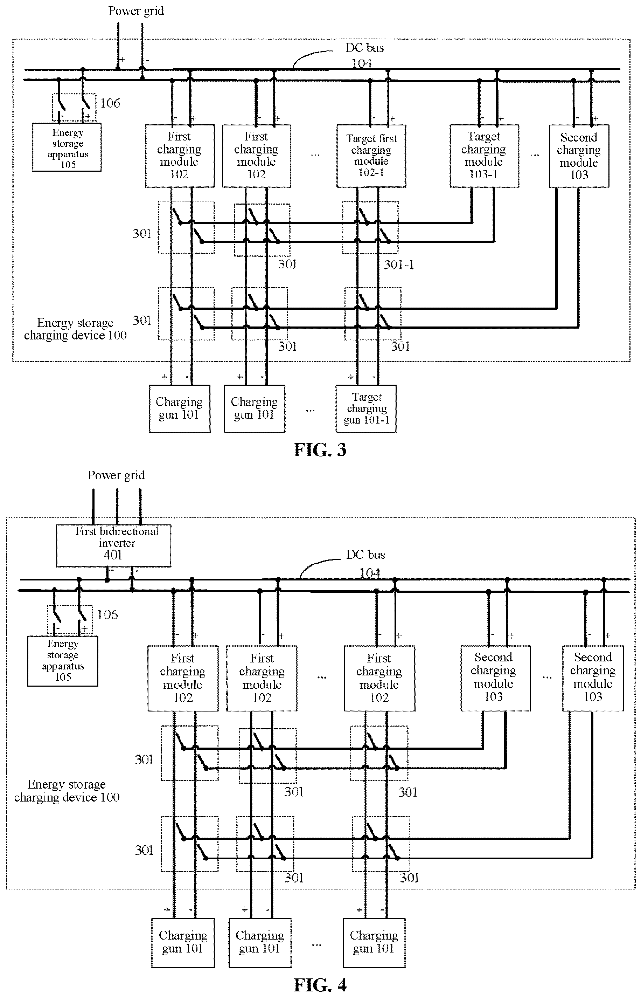

In some embodiments, Fig. 3 is a second optional schematic structural diagram of an energy storage charging device provided in an embodiment of the present disclosure. As shown in Fig. 3, the second charging module 103 is connected to the charging gun through a power supply switch 301, and a charging gun is connected to each second charging module based on the power supply switch. Based on Fig. 3, step S202 may be implemented by step S2021:
Step S2021, determining the difference between the charging power and the first supply power as the power to be allocated.

In the embodiments of the present disclosure, the power to be allocated is the difference between the first supply power of the first charging module corresponding to the device to be charged and the charging power.

Correspondingly, step S203 can be implemented by step S2031:
Step S2031, based on the second supply power of each second charging module and the power to be allocated, determining, among the plurality of second charging modules, at least one second charging module whose sum of supply power is greater than or equal to the power to be allocated with the error being within a preset range as a target charging module.

In the embodiments of the present disclosure, when determining the target charging module, since different types of vehicles use different batteries and have different charging power, vehicles on the market have a variety of charging power. In the embodiments of the present disclosure, the charging requirements of vehicles with different power are met through the second charging module. However, since the number of second charging modules is limited, the power provided by the target charging module will not be exactly the same as the power to be matched. In order to reduce the waste of resources, the error between the power provided by the target charging module and the power to be matched needs to be controlled within a preset range, which may be 5 kw.

In some embodiments, at least one second charging module with the smallest error between the power to be allocated and the sum of supply power can also be determined as a target charging module. For example, the power to be allocated is 97 kw, and the second supply powers of the plurality of second charging modules are 3 kw, 5 kw, 10 kw, 20 kw, 30 kw, 40 kw, 60 kw and 80 kw respectively. At this time, the two second charging modules corresponding to 20 kw and 80 kw can be determined as target charging modules, and the four second charging modules corresponding to 3 kw, 5 kw, 30 kw and 60 kw can also be determined as target charging modules. However, the error of the first target charging module is 3 kw, and the error of the second target charging module is 1 kw. In order to reduce the waste of resources, the second target charging module is determined as the target charging module for powering the device to be charged.

In some embodiments, the energy storage charging device may currently be connected to and be charging a device to be charged. Therefore, some of the plurality of second charging modules may be supplying power to other charging guns. Therefore, when selecting the target charging module, at least one second charging module with the smallest error can be selected from the idle second charging modules.

Correspondingly, the charging method further comprises step S1:
Step S1, closing the power supply switch between the target charging module and the charging gun connected to the device to be charged, so as to supply power to the device to be charged through the target charging module and the first charging module corresponding to the device to be charged.

In the embodiments of the present disclosure, after the target charging module is determined, the power supply switch between the target charging module and the charging gun connected to the device to be charged is closed. Based on Fig. 3, the plurality of charging guns 101 include a target charging gun connected to the device to be charged. If the target charging gun is 101-1, the target charging gun 101-1 is connected to the target first charging module 102-1 among the plurality of first charging modules 102, and the target charging module determined among the plurality of second charging modules 103 is 103-1. At this time, the first power supply switch 301-1 among the plurality of power supply switches 301 is closed to power the device to be charged through the target charging module 103-1 and the target first charging module 102-1.

In the embodiments of the present disclosure, the error between the target charging module and the power to be allocated is taken into consideration, and the error is controlled within a preset range, which can reduce the waste of resources.

With the development of new energy power generation technology, electric devices can transmit electricity to charging apparatuses, thereby transmitting electric energy to energy storage systems or power grids through charging apparatuses, in order to achieve electric energy arbitrage and increase user income. Electric devices can provide electric energy in ways including vehicle to vehicle, vehicle to grid (V to G) or vehicle to battery (V to B). After receiving the electric energy transmitted by the vehicle, the energy storage charging device can transmit the received electric energy to other devices to be charged connected to the energy storage charging device; it can also transmit the received electric energy to the energy storage apparatus to realize the charging operation of the energy storage apparatus; it can also transmit the received electric energy to the power grid for use by other electric devices connected to the power grid.

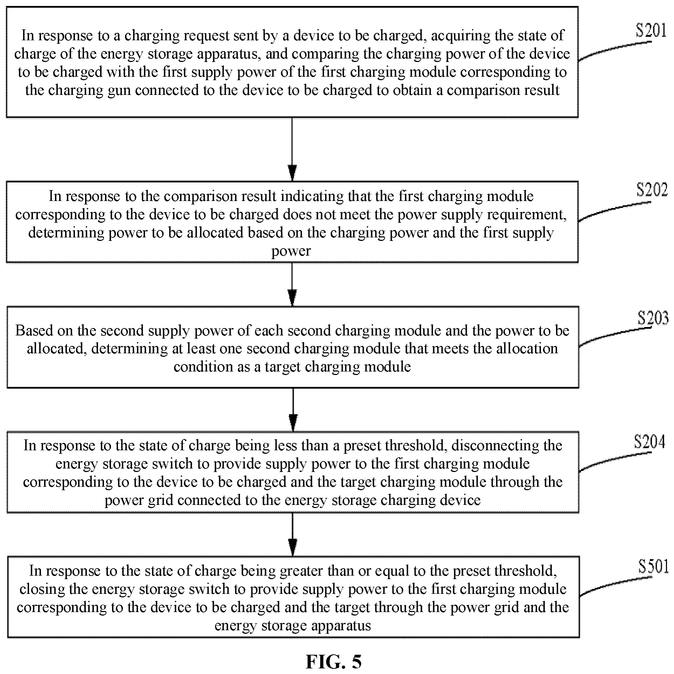

Based on the above embodiment, Fig. 4 is a third optional structural schematic diagram of an energy storage charging device provided in an embodiment of the present disclosure. As shown in Fig. 4, the energy storage charging device further comprises a first bidirectional inverter 401 connected to the DC bus 104, and the other side of the first bidirectional inverter 401 is connected to the power grid. Based on Fig. 4, Fig. 5 is a second optional schematic flow diagram of a charging method provided in an embodiment of the present disclosure. As shown in Fig. 5, the charging method provided in an embodiment of the present disclosure can further comprise step S501:

Step S501, in response to the state of charge being greater than or equal to the preset threshold, closing the energy storage switch to supply power to the first charging module corresponding to the device to be charged and the target through the power grid and the energy storage apparatus.

Here, the power grid converts AC through the first bidirectional inverter. In the embodiments of the present disclosure, the rated power of the first bidirectional inverter is less than or equal to 150 kW, which enables the energy storage charging device to achieve low power input, without the need to configure an external transformer for the energy storage charging device or to expand the transformer capacity, thereby reducing the cost of the energy storage charging device.

In the embodiments of the present disclosure, when the state of charge of the energy storage apparatus is greater than 5%, the energy storage switch can be closed to provide supply power to the first charging module corresponding to the device to be charged and the target charging module through the power grid and the energy storage apparatus.

In the embodiments of the present disclosure, the source of electric energy for charging the device to be charged is determined based on the state of the energy storage apparatus. When the electric quantity of the energy storage apparatus is low, power continues to be supplied through the power grid, thereby avoiding the problem of damage to the energy storage apparatus caused by the energy storage apparatus with low electric quantity continuing to supply power.

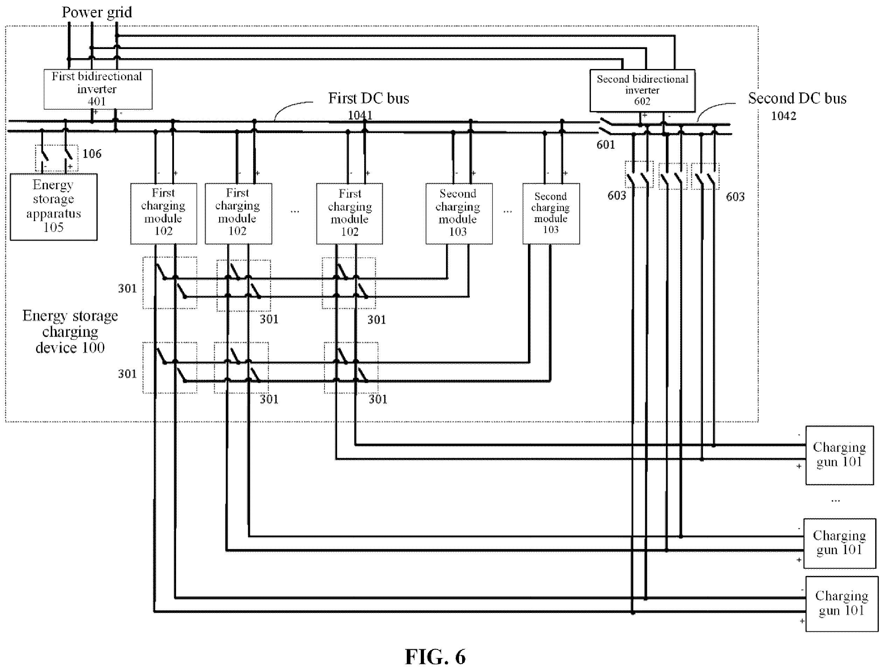

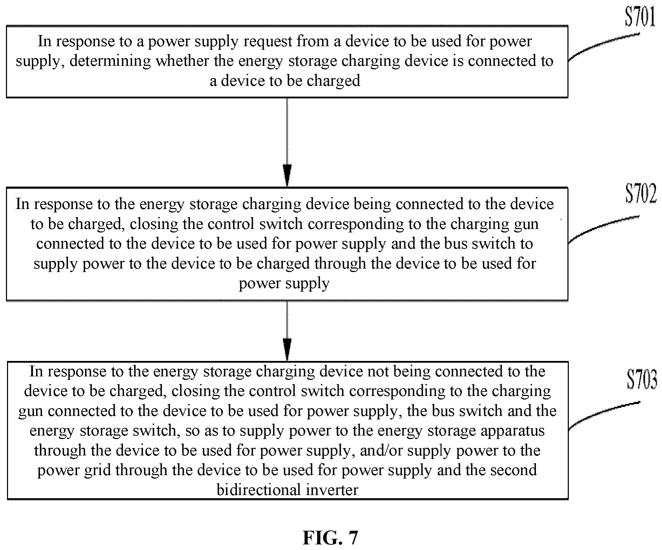

Based on the foregoing embodiments, Fig. 6 is a fourth optional schematic structural diagram of an energy storage charging device provided in an embodiment of the present disclosure. As shown in Fig. 6, the DC bus 104 of the energy storage charging device comprises a first DC bus 1041 and a second DC bus 1042, and the first DC bus 1041 and the second DC bus 1042 are connected via a bus switch 601; the second DC bus 1042 is connected to each charging gun 101 and the second bidirectional inverter 602 respectively, and a control switch 603 is provided between each charging gun 101 and the second DC bus 1042. Based on Fig. 6, Fig. 7 is a third optional schematic flow diagram of a charging method provided in an embodiment of the present disclosure. As shown in Fig. 7, the charging method provided in an embodiment of the present disclosure can further comprise step S701 to step S703:

Step S701, in response to a power supply request from a device to be used for power supply, determining whether the energy storage charging device is connected to a device to be charged.

In some embodiments, the device to be used for power supply refers to a vehicle that supplies power to the energy storage charging device, and the power supply request refers to a power supply request including at least supply current and supply power, which is sent by the vehicle for power supply to the energy storage charging device through wireless communication or by the connected charging gun, that is, a V to G request of the vehicle. After receiving the power supply request, the energy storage charging device determines whether to receive power supply from the device to be used for power supply based on the supply current and the supply power in the power supply request.

In the embodiments of the present disclosure, when receiving the power supply request of the device to be used for power supply, it is determined whether the energy storage charging device is connected with a device to be charged. If a device to be charged is connected, the electric energy of the device to be used for power supply can be provided to the device to be charged. If there is no device to be charged connected, the electric energy can be transmitted to the energy storage apparatus of the energy storage charging device or the power grid.

Step S702, in response to the energy storage charging device being connected to a device to be charged, closing the control switch corresponding to the charging gun connected to the device to be used for power supply and the bus switch to supply power to the device to be charged through the device to be used for power supply.

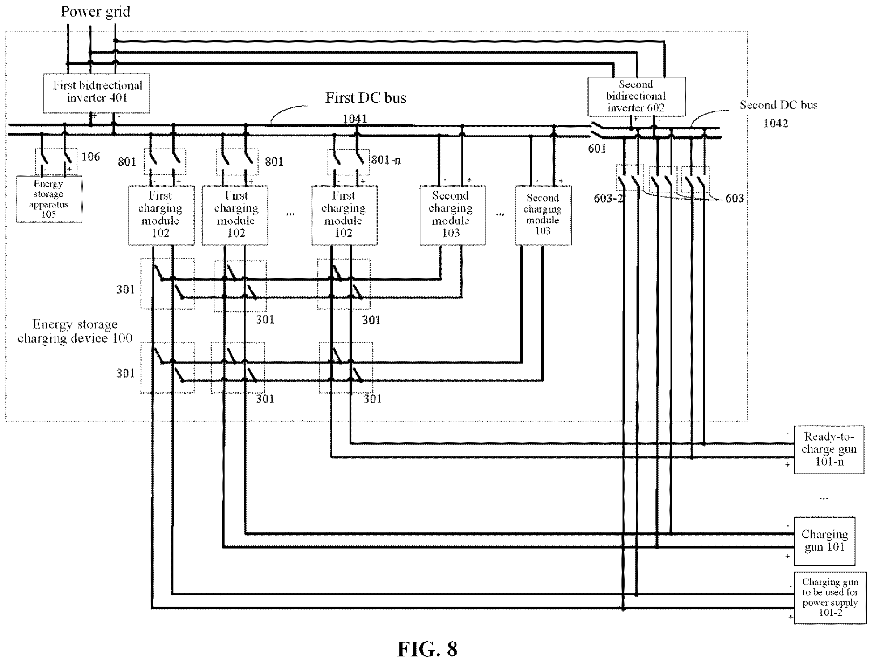

In some embodiments, Fig. 8 is a fifth optional schematic structural diagram of an energy storage charging device provided in an embodiment of the present disclosure. As shown in Fig. 8, a selector switch 801 is provided between each first charging module 102 and the DC bus (i.e., the first DC bus 1041 in Fig. 8). Correspondingly, step S702 can be implemented by step S7021:
Step S7021, closing the control switch corresponding to the charging gun connected to the device to be used for power supply, the bus switch and the selector switch corresponding to the charging gun connected to the device to be charged to supply power to the device to be charged through the device to be used for power supply.

In some embodiments, if the energy storage charging device is connected to a device to be charged, at this time, the device to be charged connected to the energy storage charging device is powered by the device to be used for power supply. At this time, the control switch corresponding to the charging gun connected to the device to be used for power supply, the bus switch and the selector switch corresponding to the charging gun connected to the device to be charged are closed to realize the power supply path. For example, based on Fig. 8, the charging gun connected to the device to be used for power supply is the charging gun to be used for power supply 101-2, and the charging gun connected to the device to be charged is the ready-to-charge gun 101-n. At this time, the control switch corresponding to the charging gun to be used for power supply 101-2 connected to the device to be used for power supply (such as the power supply control switch 603-2 in the figure), the bus switch 601 and the selector switch corresponding to the ready-to-charge gun 101-n connected to the device to be charged (such as the charging selector switch 801-n in the figure) are closed to realize that the device to be used for power supply supplies power to the device to be charged.

Step S703, in response to the energy storage charging device not being connected to a device to be charged, closing the control switch corresponding to the charging gun connected to the device to be used for power supply, the bus switch and the energy storage switch, so as to supply power to the energy storage apparatus through the device to be used for power supply, and/or supply power to the power grid through the device to be used for power supply and the second bidirectional inverter.

In the embodiments of the present disclosure, if the energy storage charging device is not connected to a device to be charged, at this time, the energy storage apparatus of the energy storage charging device or the power grid is powered by the device to be used for power supply. Based on Fig. 8, the power supply control switch 603-2 corresponding to the charging gun to be used for power supply 101-2 connected to the device to be used for power supply, the bus switch 601 and the energy storage switch 106 can be closed to supply power to the energy storage apparatus through the device to be used for power supply, or the power grid can be powered through the device to be used for power supply and the second bidirectional inverter 602, or the power supply control switch 603-2 corresponding to the charging gun to be used for power supply 101-2 connected to the device to be used for power supply, the bus switch 601 and the energy storage switch 106 can be closed to supply power to the energy storage apparatus and the power grid at the same time through the device to be used for power supply and the second bidirectional inverter 602.

The embodiments of the present disclosure enable electric vehicles to act as a power source to supply power to the power grid when they do not need to be charged and have sufficient electric energy. During peak hours of the power grid, electric vehicles can serve as distributed energy storage units to provide the necessary power support for the power grid, helping to ease the pressure on the power grid, thereby improving overall energy utilization efficiency. Also, electric vehicles have large battery capacity and are charged quickly. As a medium for energy storage and release, they can more effectively balance electricity supply and demand and reduce energy waste. At the same time, for electric vehicle owners, supplying power to the power grid can provide certain economic compensation and reduce the cost of using the vehicle.

In some embodiments, the charging method provided in the embodiments of the present disclosure may further comprise step S11 and step S12:
Step S11, in response to the power supply request, determining whether the energy storage charging device is connected to a device to be used for power supply that is supplying power.

In the embodiments of the present disclosure, in order to ensure the system stability of the energy storage charging device, it is necessary to accurately control the power input received from the electric vehicle. Processing V to G requests from a plurality of vehicles at the same time may cause instability in the power input and affect the performance and life of the energy storage charging device. Therefore, the energy storage charging device can only receive input from one device to be used for power supply at a time to reduce safety risks in the power transmission process, such as overcurrent, overvoltage and other problems.

Therefore, in the embodiments of the present disclosure, when receiving a V to G request from a device to be used for power supply, it will first determine whether there is a device to be used for power supply that is supplying power to the energy storage charging device currently.

Step S12, in response to the energy storage charging device being connected to a device to be used for power supply that is supplying power, acquiring the power supply end time of the device to be used for power supply that is supplying power, and sending the power supply end time to the device to be used for power supply that sends the power supply request.

Here, when the energy storage charging device is connected to a device to be used for power supply that is supplying power, a data acquisition request can be sent to the device to be used for power supply that is supplying power to obtain the state of charge of the vehicle, so as to estimate the power supply end time of the device to be used for power supply that is supplying power and send the power supply end time to the device to be used for power supply that sends the power supply request, allowing the vehicle owner of the device to be used for power supply that sends the power supply request to determine whether to wait until the vehicle's power supply ends before supplying power.

In the embodiments of the present disclosure, the energy storage charging device is restricted to only have one vehicle to perform V to G, which ensures the stability of power input and reduces the safety risks in the power transmission process.

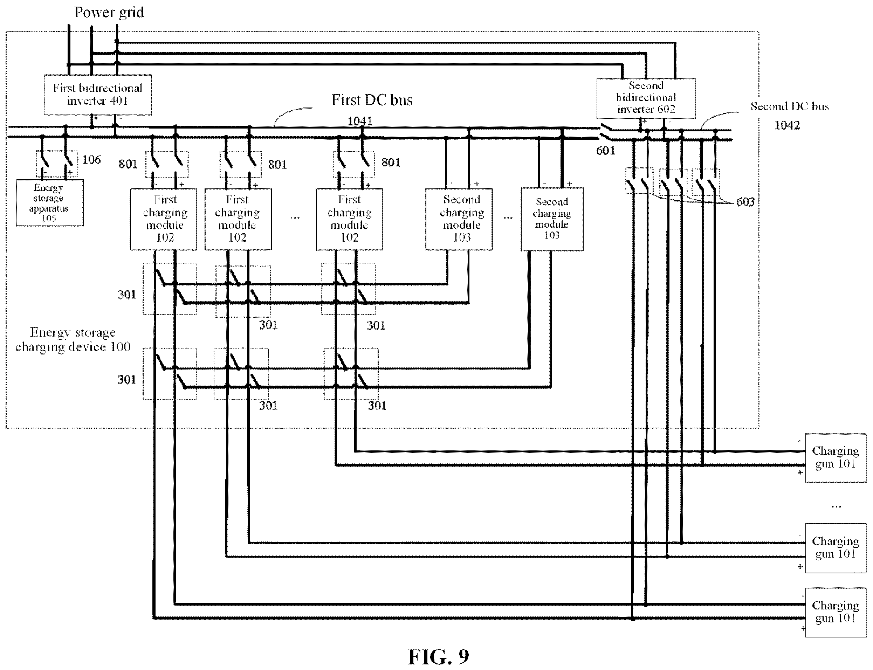

Fig. 9 is a sixth optional structural schematic diagram of an energy storage charging device provided in an embodiment of the present disclosure. As shown in Fig. 9, the embodiment of the present disclosure provides an energy storage charging device. An energy storage charging device 100 can be connected to a plurality of charging guns 101. The energy storage charging device 100 at least comprises a plurality of first charging modules 102, a plurality of second charging modules 103 and a control unit (not shown). The control unit is connected to the modules in the energy storage charging device 100 by wire or wirelessly to achieve real-time communication and data transmission. The energy storage charging device 100 further comprises an energy storage apparatus 105 connected to a DC bus (including a first DC bus 1041 and a second DC bus 1042, the first DC bus 1041 and the second DC bus 1042 being connected via a bus switch 601), an energy storage switch 106 is provided between the energy storage apparatus 105 and the DC bus (i.e., the first DC bus 1041), and the energy storage apparatus 105 is used to store electric energy.

The charging gun is used to connect the device to be charged or the device to be used for power supply, each first charging module is connected to a corresponding charging gun, and each second charging module is connected to all of the charging guns.

The control unit is used for, in response to a charging request sent by a device to be charged, acquiring the state of charge of the energy storage apparatus, and comparing the charging power of the device to be charged with the first supply power of the first charging module corresponding to the charging gun connected to the device to be charged, to obtain a comparison result; in response to the comparison result indicating that the first charging module corresponding to the device to be charged does not meet the power supply requirement, determining power to be allocated based on the charging power and the first supply power; based on the second supply power of each second charging module and the power to be allocated, determining at least one second charging module that meets the allocation condition as a target charging module; in response to the state of charge being less than a preset threshold, disconnecting the energy storage switch to supply power to the first charging module corresponding to the device to be charged and the target charging module through the power grid connected to the energy storage charging device.

In some embodiments, the energy storage charging device 100 further comprises a power supply switch 301 between the second charging module 103 and the charging gun 101, each charging gun is connected to all the second modules, and when there are n charging guns and m second charging modules, there are n*m power supply switches.

Correspondingly, the control unit is also used for the control unit, also used for: determining the difference between the charging power and the first supply power as the power to be allocated; determining, based on the second supply power of each second charging module and the power to be allocated, among the plurality of second charging modules, at least one second charging module whose sum of supply power is not less than the power to be allocated with the error being within a preset range as a target charging module; closing the power supply switch between the target charging module and the charging gun connected to the device to be charged, so as to supply power to the device to be charged through the target charging module and the first charging module corresponding to the device to be charged.

In some embodiments, the energy storage charging device 100 further comprises a first bidirectional inverter 401; the energy storage apparatus 105 is connected to the DC bus (i.e., the first DC bus 1041) through the energy storage switch 106 for storing electric energy; the first bidirectional inverter 401 is connected to the DC bus (i.e., the first DC bus 1041) and the power grid respectively for conversion between AC and DC.

The control unit is also used to, in response to the state of charge being greater than or equal to the preset threshold, close the energy storage switch to supply power to the first charging module corresponding to the device to be charged and the target charging module through the power grid and the energy storage apparatus.

In some embodiments, a control switch 603 is provided between each charging gun and the second DC bus 1042, the energy storage charging device 100 further comprises a second bidirectional inverter 602, and the second bidirectional inverter 602 is connected to the second DC bus 1042 and the power grid respectively.

The control unit is also used for, in response to a power supply request of a device to be used for power supply, determining whether the energy storage charging device is connected to a device to be charged; in response to the energy storage charging device being connected to a device to be charged, closing the control switch corresponding to the charging gun connected to the device to be used for power supply and the bus switch, so as to supply power to the device to be charged through the device to be used for power supply; in response to the energy storage charging device not being connected to a device to be charged, closing the control switch corresponding to the charging gun connected to the device to be used for power supply, the bus switch and the energy storage switch, so as to supply power to the energy storage apparatus through the device to be used for power supply, and/or, supply power to the power grid through the device to be used for power supply and the second bidirectional inverter.

In some embodiments, a selector switch 801 is provided between each first charging module 102 and the DC bus (i.e., the first DC bus 1041), and the number of the selector switches 801 is the same as the number of the first charging modules 102, and they correspond one to one.

The control unit is also used for closing the control switch corresponding to the charging gun connected to the device to be used for power supply, the bus switch and the selector switch corresponding to the charging gun connected to the device to be charged to supply power to the device to be charged through the device to be used for power supply.

In the embodiments of the present disclosure, the input power of the energy storage charging device is a low power input, and the input power may be ≤150 kW, that is, the rated power of the first bidirectional inverter and the second bidirectional inverter connected to the power grid is ≤150 kW. The output of the energy storage charging device is that of a plurality of charging guns, and the total power of the sum of power of the charging guns can be ≥360 kW, that is, the energy storage charging device provided in the embodiments of the present disclosure achieves low power input and high power output.

In the embodiments of the present disclosure, the ratio of the output power of the energy storage apparatus in the energy storage charging device to the sum of rated power of the plurality of first charging modules and the plurality of second charging modules is 1:1, that is, the output power of the energy storage apparatus can be equal to the sum of rated power of the plurality of first charging modules and the plurality of second charging modules.

In some embodiments, the power of the plurality of first charging modules and the plurality of second charging modules can be provided by the energy storage apparatus and the power grid together. Therefore, the sum of rated power of the plurality of first charging modules and the plurality of second charging modules can be greater than the output power of the energy storage apparatus.

In the embodiments of the present disclosure, the ratio of rated energy to rated power of the energy storage apparatus is no greater than 1:3.

The charging method provided in the embodiments of the present disclosure is realized based on the energy storage charging device, and the description of the embodiments on the part of the energy storage charging device is similar to that of the above-mentioned method embodiments, with beneficial effects similar to those of the method embodiments. In some embodiments, the functions or modules provided in the energy storage charging device provided in the embodiments of the present disclosure can be used to execute the method described in the above method embodiments. For technical details not disclosed in the embodiments of the energy storage charging device of the present disclosure, please refer to the description of the method embodiments of the present disclosure for understanding.

An exemplary application of the embodiment of the present disclosure in a real application scenario is described below.

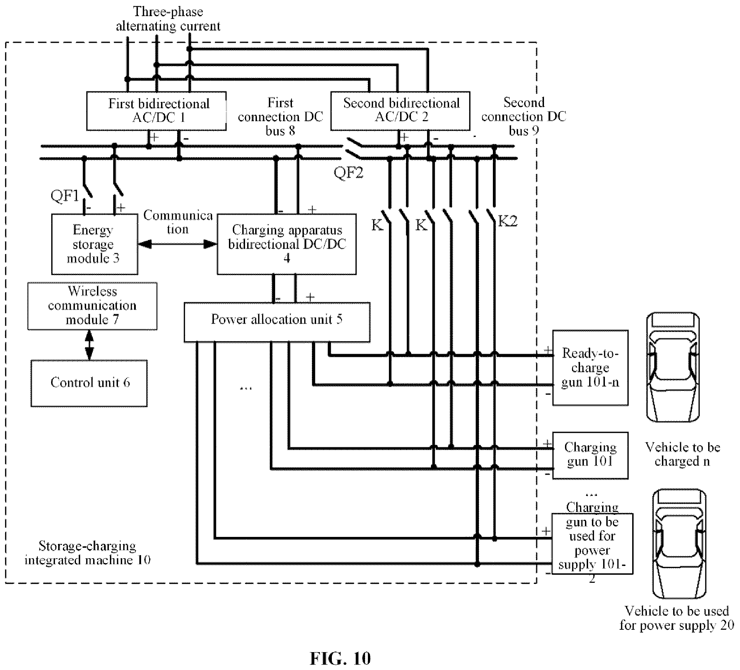

In order to solve the problems existing in the related art, the embodiment of the present disclosure provides an architecture and method for power allocation of a plurality of charging guns, which is applied to a storage-charging integrated machine (i.e., an energy storage charging device) with a plurality of charging guns. Fig. 10 is a schematic diagram of the architecture of a storage-charging integrated machine provided in an embodiment of the present disclosure. As shown in Fig. 10, the storage-charging integrated machine 10 comprises a first bidirectional AC/DC 1 (i.e., a first bidirectional inverter), a second bidirectional AC/DC 2 (i.e., a second bidirectional inverter), an energy storage module 3 (i.e., an energy storage apparatus), a charging apparatus bidirectional DC/DC 4 (including n first charging apparatus bidirectional DC/DCs and m second charging apparatus bidirectional DC/DCs), a power allocation unit 5 (i.e., a power supply switch), a control unit 6, a wireless communication module 7, a first connecting DC bus 8, a second connecting DC bus 9, an energy storage connection switch QF1, a bus connection switch QF2, a plurality of control connection switches K and a plurality of charging guns 101. The number of the control connection switches K is the same as the number of the plurality of charging guns 101, and they correspond one to one.

Among them, the input power of the storage-charging integrated machine 10 is a low power input, the input power is ≤150 kW, the system output of the storage-charging integrated machine 10 is that of a plurality of charging guns, and the total power of the sum of power of the charging guns is ≥360 kW; the output power of the energy storage module 3 and the rated power of the charging apparatus bidirectional DC/DC 4 are in a ratio of 1:1; the ratio of rated energy to rated power of the energy storage module 3 is not greater than 1:3; the rated power of the bidirectional AC/DC device (i.e., the first bidirectional AC/DC 1 and the second bidirectional AC/DC 2) interconnected to the transformer is ≤150 kW, that is, the input power of the storage-charging integrated machine 10 is a low power input.

In the embodiments of the present disclosure, the power allocation unit 5 can be used to evenly distribute the power of a plurality of charging guns. By closing the bus connection switch QF2 and disconnecting the energy storage connection switch QF1, the first connection DC bus 8 is connected to the second connection DC bus 9. At the same time, the vehicle to be used for power supply 20 (i.e., the vehicle connected to the charging gun to be used for power supply 101-2) performs the V to G function and the vehicle to be charged n (i.e., the vehicle connected to the ready-to-charge gun 101-n) performs the charging function, and the energy of the vehicle to be used for power supply 20 is transferred to the vehicle to be charged n. Here, only a vehicle connected to one charging gun is allowed to perform the V to G function.

In the embodiments of the present disclosure, in the case of SOC ≥ p or SOE ≥ q (p and q can be set, for example, p is 5% and q is 5%) for the energy storage module 3, all charging gun power comes from the energy storage module and/or the power grid.

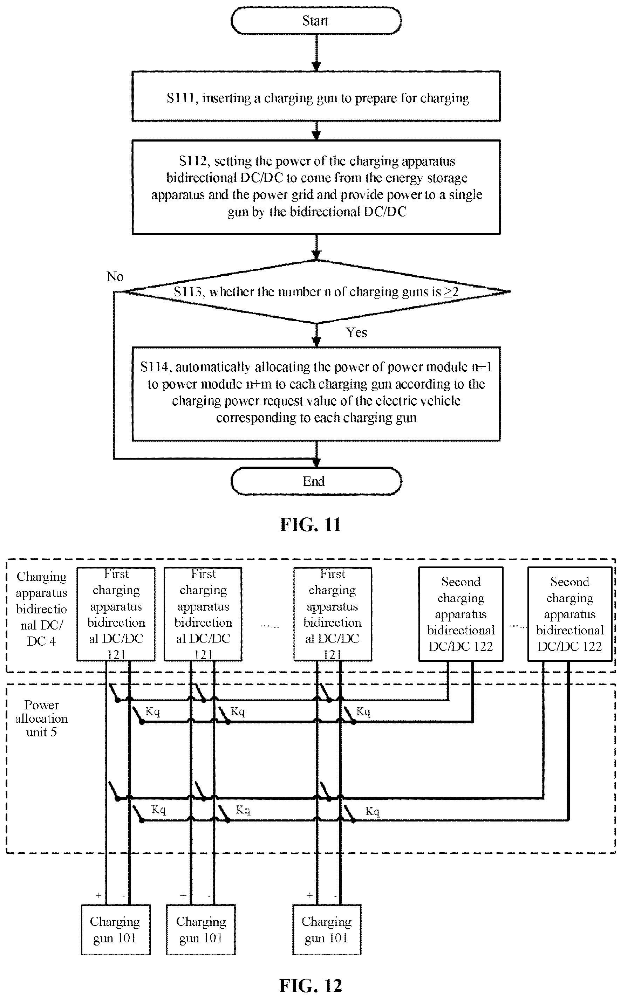

Fig. 11 is a schematic flow diagram of power allocation of a plurality of charging guns in a storage-charging integrated machine provided in an embodiment of the present disclosure. As shown in Fig. 11, power allocation of a plurality of charging guns in the storage-charging integrated machine may be implemented through steps S111 to S114:
Step S111, inserting a charging gun to prepare for charging.

In the embodiments of the present disclosure, when a charging gun in the storage-charging integrated machine is connected to a vehicle for charging, the charging gun power allocation process is started.

Step S112, setting the power of the charging apparatus bidirectional DC/DC to come from the energy storage module and the power grid and provide power to a single gun by the bidirectional DC/DC.

The present disclosure can set the power source of the charging apparatus bidirectional DC/DC, which can be an energy storage module or the power grid.

Step S113, checking whether the number n of charging guns is ≥2.

In the embodiments of the present disclosure, power allocation is performed in response to a plurality of devices to be charged being connected to the integrated storage-charging machine, that is, when a plurality of charging guns are connected to devices to be charged.

Step S114, automatically allocating the power of power module n+1 to power module n+m to each charging gun according to the charging power request value of the electric vehicle corresponding to each charging gun.

Fig. 12 is a schematic structural diagram of a power allocation unit provided in an embodiment of the present disclosure. As shown in Fig. 12, the charging apparatus bidirectional DC/DC 4 comprises a plurality of charging apparatus bidirectional DC/DCs, and there may be n+m charging apparatus bidirectional DC/DCs, including n first charging apparatus bidirectional DC/DC 121 and m second charging apparatus bidirectional DC/DC 122. Each first charging apparatus bidirectional DC/DC 121 is connected to a corresponding charging gun 101, and each second charging apparatus bidirectional DC/DC 122 in the second charging apparatus bidirectional DC/DC 122 is connected to each charging gun respectively, and each second charging apparatus bidirectional DC/DC 122 is connected to a charging gun 101 through a power allocation unit 5 (i.e., a plurality of power supply connection switches Kq).

The embodiments of the present disclosure can automatically allocate the power of power module n+1 to power module n+m (i.e., m second charging apparatus bidirectional DC/DC 122) to each charging gun connected to the vehicle according to the charging power request value of each charging gun corresponding to the electric vehicle.

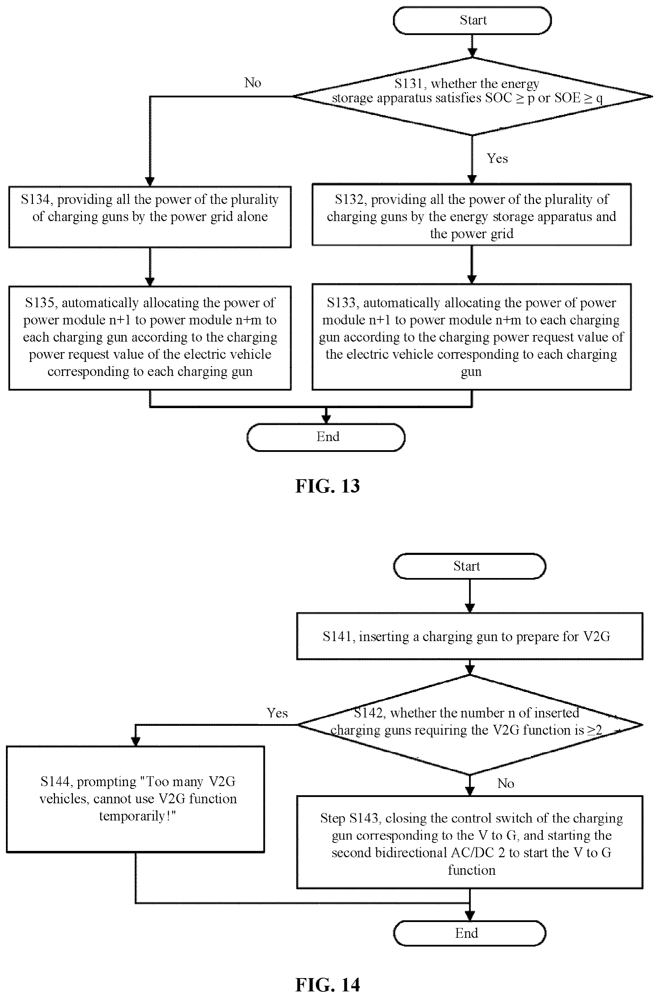

Fig. 13 is a schematic flow diagram of power allocation of an energy storage module provided in an embodiment of the present disclosure. As shown in Fig. 13, power allocation of the energy storage module can be implemented through steps S131 to S135:
Step S131, whether the energy storage module satisfies SOC≥p or SOE≥q.

Here, p and q can be set by oneself, p and q can be the same or different, p and q can be 5%.

In the embodiments of the present disclosure, after being connected to the vehicle, the state of charge or remaining energy of the energy storage module can be determined first. When the energy of the energy storage module is too low, the vehicle can be powered by the power grid.

Step S132, providing all the power of the plurality of charging guns by the energy storage module and the power grid together.

In some embodiments, when the energy storage module satisfies SOC≥p or SOE>q, all the power of the plurality of charging guns can be provided by the energy storage module and the power grid.

Step S133, automatically allocating the power of power module n+1 to power module n+m to each charging gun according to the charging power request value of the electric vehicle corresponding to each charging gun.

Here, power module n+1 to power module n+m refer to m second charging apparatus bidirectional DC/DCs 122. At this time, based on the charging power request value of each charging gun corresponding to the electric vehicle, the power in the m second charging apparatus bidirectional DC/DCs 122 provided by the energy storage module and the power grid together can be evenly allocated to each charging gun, or the power can be intelligently allocated to each charging gun based on the charging power request value, so that each charging gun can provide the required charging power to the corresponding vehicle.

Step S134, providing all the power of the plurality of charging guns by the power grid alone.

In some embodiments, in the case of the SOC<p or SOE<q of the energy storage module, the power of the plurality of charging guns is all provided by the power grid alone, the energy storage module does not provide power, and when the power of the power grid is sufficient, it replenishes energy to the energy storage module.

Step S135: automatically allocating the power of the m second charging apparatus bidirectional DC/DCs 122 to each charging gun according to the charging power request value of each charging gun corresponding to the electric vehicle.

At this time, based on the charging power request value of each charging gun corresponding to the electric vehicle, the power in the m second charging apparatus bidirectional DC/DCs 122 provided by the power grid can be allocated to each charging gun, or the power can be intelligently allocated to each charging gun based on the charging power request value, so that each charging gun can provide the required charging power to the corresponding vehicle.

Based on Fig. 10, Fig. 14 is a schematic flow diagram of the V to G function in the storage-charging integrated machine provided in an embodiment of the present disclosure. As shown in Fig. 14, the V to G function in the storage-charging integrated machine is implemented through steps S141 to S144:
Step S141, inserting a charging gun to prepare for V to G.

In some embodiments, a power supply request from a vehicle is received, and it is determined that the vehicle connected to the charging gun is ready for V to G.

Step S142, determining whether the number n of inserted charging guns requiring the V to G function is ≥2.

Here, when it is determined that there is a vehicle ready for V to G, it is necessary to determine whether the number of charging guns that currently require the V to G function is greater than 1, that is, whether there is a vehicle currently performing V to G. In order to ensure the system stability of the storage-charging integrated machine, it is necessary to accurately control the power input received from the electric vehicle. Processing V to G requests from a plurality of vehicles at the same time may cause unstable power input and affect the performance and life of the storage-charging integrated machine. Therefore, the storage-charging integrated machine can only receive power input from one vehicle at a time.

Step S143: closing the control switch of the charging gun corresponding to the V to G function, and starting the second bidirectional AC/DC 2 to start the V to G function.

If the vehicle currently connected to the storage-charging integrated device is not performing V to G, the control switch corresponding to the vehicle that needs to perform V to G is closed. As shown in Fig. 10, if the charging gun connected to the vehicle that needs to perform V to G is the charging gun to be used for power supply 101-2, the target control connection switch K2 among the plurality of control connection switches K is closed, and the second bidirectional AC/DC 2 is started, so that the vehicle performing V to G supplies power to the power grid.

In some embodiments, the target control connection switch K2, the bus connection switch QF2 and the energy storage connection switch QF1 may also be closed, so that the vehicle to be used for power supply 20 performing V to G supplies power to the energy storage module 3.

Step S144, prompting "Too many V to G vehicles, cannot use V to G function temporarily!" .

In some embodiments, if there is a vehicle currently connected to the storage-charging integrated device that is performing V to G, it cannot receive V to G from other vehicles. At this time, the display interface of the storage-charging integrated device may display "Too many V to G vehicles, cannot use V to G function temporarily!" , to prompt the user.

It should be understood that references throughout the specification to "one embodiment" or "an embodiment" imply that specific features, structures, or characteristics related to the embodiment are included in at least one embodiment of the present disclosure. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in the various embodiments of the present disclosure, the size of the serial numbers of the above steps/processes does not imply the order of execution, and the execution order of each step/process should be determined by its function and internal logic, and should not constitute any limitations on the implementation process of the embodiment of the present disclosure. The above serial numbers of the embodiments of the present disclosure are only for description and do not represent the advantages and disadvantages of the embodiments.

The orientation or positional relationships indicated by the terms "upper", "lower", "top", "bottom", "front", "rear", "inner", "outer" and the like are used in the present disclosure only for facilitating the description of the present disclosure, rather than indicating or implying that the device referred to must have a particular orientation or be constructed and operated in a particular orientation, and therefore shall not be interpreted as limiting the scope of protection of the present disclosure.

In the description of the present disclosure, it should also be noted that, unless otherwise expressly specified and limited, the terms "mount," "link," and "connect" should be broadly understood, for example, they may be a fixed connection or a detachable connection or be an integrated connection; or may be a direct connection or an indirect connection through an intermediate medium. Those skilled in the art may understand the specific meaning of the above terms in the present disclosure according to the specific situation.

It should be noted that terms "including", "comprising", or any other variations in the present disclosure are intended to cover non-exclusive inclusion, such that a process, method, item or apparatus that includes a series of elements not only includes those elements, but also other elements that are not explicitly listed, or further include elements inherent in such a process, method, item or apparatus. Without more limitations, elements defined by a statement "including an" do not exclude the existence of other identical elements in the process, method, item or apparatus that includes the elements.

In several embodiments provided in the present disclosure, it should be understood that the disclosed system, device and method may be implemented in other ways. The device embodiments described above are only illustrative. for example, dividing of units is only a kind of logical function dividing, and there may be other dividing modes in actual implementation. For example, the plurality of units or components can be combined or integrated into another system, or some features can be ignored or not executed. In addition, the coupling, direct coupling, or communication connection between the various components displayed or discussed can be indirect coupling or communication connection through some interfaces, equipment or units, which can be electrical, mechanical, or other forms.

The units mentioned above as separate components may be, or may not be physically separated, and the parts displayed as units may be, or may not be physical units; they may be located in one place or distributed onto a plurality of network units; and some or all of the units can be selected according to actual needs to achieve the purpose of the solution of the embodiment. In addition, all functional units in the embodiments of the present disclosure may be integrated into one processing unit, or each unit may serve as a separate unit, or two or more units may be integrated into one unit. The integrated units mentioned above may be implemented in a hardware form or in a form of hardware and software functional units.

The above are merely the embodiments of the present disclosure, but are not intended to limit the scope of protection of the present disclosure. Any modifications, equivalent replacements and improvements made within the spirit and scope of the present disclosure shall be included within the scope of protection of the present disclosure.

## Claims

1. A charging method, applicable to a control unit of an energy storage charging device, wherein the energy storage charging device is connected to a plurality of charging guns; the energy storage charging device comprises at least an energy storage apparatus connected to a DC bus, a plurality of first charging modules each connected to a corresponding charging gun, and a plurality of second charging modules each connected to all of the charging guns, any two charging modules of the plurality of first charging modules and the plurality of second charging modules are connected in parallel to the DC bus, and an energy storage switch is provided between the energy storage apparatus and the DC bus, the charging method comprises:
in response to a charging request sent by a device to be charged, acquiring a state of charge of the energy storage apparatus, and comparing a charging power of the device to be charged with a first supply power of the first charging module corresponding to the charging gun connected to the device to be charged to obtain a comparison result;
in response to the comparison result indicating that the first charging module corresponding to the device to be charged does not meet a power supply requirement, determining power to be allocated based on the charging power and the first supply power;
based on a second supply power of each second charging module and the power to be allocated, determining at least one second charging module that meets an allocation condition as a target charging module; and
in response to the state of charge being less than a preset threshold, disconnecting the energy storage switch to supply power to the first charging module corresponding to the device to be charged and the target charging module through a power grid connected to the energy storage charging device.

2. The charging method according to claim 1, wherein the second charging module is connected to the charging gun via a power supply switch; and the step of determining power to be allocated based on the charging power and the first supply power comprises:
determining a difference between the charging power and the first supply power as the power to be allocated;
correspondingly, the step of, based on the second supply power of each second charging module and the power to be allocated, determining at least one second charging module that meets the allocation condition as the target charging module comprises:
based on the second supply power of each second charging module and the power to be allocated, determining, among the plurality of second charging modules, at least one second charging module whose sum of supply power is greater than or equal to the power to be allocated with a deviation within a preset range as the target charging module; and
correspondingly, the charging method further comprises:
closing the power supply switch between the target charging module and the charging gun connected to the device to be charged, so as to supply power to the device to be charged through the target charging module and the first charging module corresponding to the device to be charged.

3. The charging method according to claim 1 or 2, wherein the energy storage charging device further comprises a first bidirectional inverter, and the other side of the first bidirectional inverter is connected to the power grid; and the charging method further comprises:
in response to the state of charge being greater than or equal to the preset threshold, closing the energy storage switch to supply power to the first charging module corresponding to the device to be charged and the target charging module through the power grid and the energy storage apparatus.

4. The charging method according to any one of claims 1 to 3, wherein the DC bus of the energy storage charging device comprises a first DC bus and a second DC bus, the first DC bus and the second DC bus are connected via a bus switch; the second DC bus is connected to each charging gun and a second bidirectional inverter respectively, and a control switch is provided between each charging gun and the second DC bus;
the charging method further comprises:
in response to a power supply request from a device to be used for power supply, determining whether the energy storage charging device is connected to the device to be charged;
in response to the energy storage charging device being connected to the device to be charged, closing the control switch corresponding to the charging gun connected to the device to be used for power supply and the bus switch to supply power to the device to be charged through the device to be used for power supply; and
in response to the energy storage charging device not being connected to a device to be charged, closing the control switch corresponding to the charging gun connected to the device to be used for power supply, the bus switch and the energy storage switch, so as to supply power to the energy storage apparatus through the device to be used for power supply, and/or supply power to the power grid through the device to be used for power supply and the second bidirectional inverter.

5. The charging method according to claim 4, wherein a selector switch is provided between each first charging module and the DC bus;
the step of closing the control switch corresponding to the charging gun connected to the device to be used for power supply and the bus switch to supply power to the device to be charged through the device to be used for power supply comprises:
closing the control switch corresponding to the charging gun connected to the device to be used for power supply, the bus switch and the selector switch corresponding to the charging gun connected to the device to be charged to supply power to the device to be charged through the device to be used for power supply.

6. The charging method according to any one of claims 1 to 5, wherein the charging method further comprises:
in response to the power supply request, determining whether the energy storage charging device is connected to a device to be used for power supply that is supplying power; and
in response to the energy storage charging device being connected to the device to be used for power supply that is supplying power, acquiring the power supply end time of the device to be used for power supply that is supplying power, and sending the power supply end time to the device to be used for power supply that sends the power supply request.

7. An energy storage charging device, comprising:
an energy storage apparatus, connected to a DC bus of the energy storage charging device, wherein an energy storage switch is provided between the energy storage apparatus and the DC bus, and the energy storage apparatus is used to store electric energy;
a plurality of first charging modules, each first charging module connected to a corresponding charging gun, wherein the energy storage charging device is connected to a plurality of charging guns, and the charging guns are used to connect devices to be charged;
a plurality of second charging modules, wherein each second charging module is connected to all of the charging guns, and any two charging modules of the plurality of first charging modules and the plurality of second charging modules are connected in parallel to the DC bus; and
a control unit, used for, in response to a charging request sent by a device to be charged, acquiring a state of charge of the energy storage apparatus, and comparing a charging power of the device to be charged with a first supply power of the first charging module corresponding to the charging gun connected to the device to be charged to obtain a comparison result; in response to the comparison result indicating that the first charging module corresponding to the device to be charged does not meet a power supply requirement, determining power to be allocated based on the charging power and the first supply power; based on a second supply power of each second charging module and the power to be allocated, determining at least one second charging module that meets an allocation condition as a target charging module; in response to the state of charge being less than a preset threshold, disconnecting the energy storage switch to supply power to the first charging module corresponding to the device to be charged and the target charging module through a power grid connected to the energy storage charging device.

8. The energy storage charging device according to claim 7, wherein the energy storage charging device further comprises a power supply switch between the second charging module and the charging gun;
the control unit is further used for determining a difference between the charging power and the first supply power as the power to be allocated;
the control unit is further used for, based on the second supply power of each second charging module and the power to be allocated, determining, among the plurality of second charging modules, at least one second charging module whose sum of supply power is not less than the power to be allocated with a deviation within a preset range as the target charging module; and
the control unit is further used for closing the power supply switch between the target charging module and the charging gun connected to the device to be charged, so as to supply power to the device to be charged through the target charging module and the first charging module corresponding to the device to be charged.

9. The energy storage charging device according to claim 7 or 8, wherein the energy storage charging device further comprises a first bidirectional inverter;
the first bidirectional inverter is connected to the DC bus and the power grid respectively, and is used for conversion between AC and DC; and
the control unit is further used for, in response to the state of charge being greater than or equal to the preset threshold, closing the energy storage switch to supply power to the first charging module corresponding to the device to be charged and the target charging module through the power grid and the energy storage apparatus.

10. The energy storage charging device according to claim 9, wherein the DC bus of the energy storage charging device comprises a first DC bus and a second DC bus, the first DC bus and the second DC bus are connected via a bus switch, and a control switch is provided between each charging gun and the second DC bus; the energy storage charging device further comprises a second bidirectional inverter;
the second bidirectional inverter is arranged between the second DC bus and the power grid;
the control unit is further used for, in response to a power supply request from a device to be used for power supply, determining whether the energy storage charging device is connected to the device to be charged;
the control unit is further used for, in response to the energy storage charging device being connected to the device to be charged, closing the control switch corresponding to the charging gun connected to the device to be used for power supply and the bus switch to supply power to the device to be charged through the device to be used for power supply; and
the control unit is further used for, in response to the energy storage charging device not being connected to a device to be charged, closing the control switch corresponding to the charging gun connected to the device to be used for power supply, the bus switch and the energy storage switch, so as to supply power to the energy storage apparatus through the device to be used for power supply, and/or supply power to the power grid through the device to be used for power supply and the second bidirectional inverter.

11. The energy storage charging device according to claim 10, wherein the rated power of the first bidirectional inverter and the second bidirectional inverter is less than a first preset value, and the sum of supply power of the plurality of first charging modules and the plurality of second charging modules is greater than a second preset value; wherein the second preset value is greater than the first preset value.
